(19) **Europäisches Patentamt**
**European Patent Office**
**Office européen des brevets**

(11) **EP 3 324 548 B1**

(12) **EUROPEAN PATENT SPECIFICATION**

(45) Date of publication and mention
of the grant of the patent:
**17.02.2021 Bulletin 2021/07**

(51) Int Cl.:
**H04B 3/56** *(2006.01)*          **B60R 16/023** *(2006.01)*
**B60R 16/027** *(2006.01)*

(21) Application number: **16199250.8**

(22) Date of filing: **17.11.2016**

(54) **BUS SYSTEM AND METHOD FOR VEHICLE SYSTEMS**

**BUSSYSTEM UND VERFAHREN FÜR FAHRZEUGSYSTEME**

**SYSTÈME DE BUS ET PROCÉDÉ POUR DES SYSTÈMES DE VÉHICULE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.05.2018 Bulletin 2018/21**

(73) Proprietor: **Aptiv Technologies Limited
St. Michael (BB)**

(72) Inventors:
• **RIEKE, Matthias
41063 Moenchengladbach (DE)**

• **EGBERT, PETER
D-51766 ENGELSKIRCHEN (DE)**

(74) Representative: **Manitz Finsterwald
Patent- und Rechtsanwaltspartnerschaft mbB
Postfach 31 02 20
80102 München (DE)**

(56) References cited:
**US-A- 4 697 092     US-A- 4 887 152
US-A- 5 727 025**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This disclosure relates to vehicles systems and in particular to bus systems and communications methods for communicating data between processing units or systems of the vehicle, such as ECUs. It has particular but not exclusive application to communication between processing units of Advanced Driver Assistance Systems (ADAS) such as camera systems, radar systems, main ADAS control units and vehicle ECUs.

BACKGROUND OF THE INVENTION

Advanced driver assistance systems (ADAS) will be used more and more in the future in vehicles in order to provide such functionality as warning indication and prevention, as well as more advanced self-driving capability. Typically such systems may use camera and radar systems (each of which may have a processor which can be regarded as an ECU) which communicate and process data in conjunction with a main ADAS controller or processor, as well as the vehicles main ECU. Such systems are necessarily complex and require high speed data communication of large amounts of data between the systems, e.g. between a vehicle ECU and ADAS systems (ECUs) and also between ADAS (sub-)systems. Such electronic control units/systems (such as ECUs) require high speed interconnections, respectively via bus systems. Current system architectures include dedicated busses for each ADAS system or function, e.g. a camera serial interface (CSI) for cameras or Peripheral Component Interconnect (PCI)) express for external or internal high speed devices. Each bus may have several (e.g. parallel) high speed lines which have implicit limitations concerning for example signal routing and trace impedance. It is a difficult to provide bus systems meeting for all requirements when designing such vehicle architectures. An example of prior art can be found in US4687092.

Typical busses in automotive devices are: PCIe 2.0 / PCIe 3.0 (up to 8 lanes); HDMI 1.4; CSI II D-Phy (up to 4 lanes); GMSL; USB; 3.0 RGMII / SGMII / XGMII. For example it is difficult and cumbersome to route a PCIe 3.0 with eight lanes/lanes and is complex task also for state of the art Electronic Computer Aided Design (ECAD). To route eight lanes means that there are eight connections of each two lines transmit and two lines of receive Additionally there are clock and control lines, which means that there can be typically up to 34 lines to route. Furthermore all lines need a controlled impedance and must preferably have the same length.

When replacing or relocating a device, it is often necessary to re-route several wires. With an increasing amount of wires, this re-routing becomes more and more difficult and time consuming. Each signal needs to be re-simulated and the electromagnetic compatibility must be considered. Typical data rates of modern bus systems are limited to round about 10GBit/s, but future high complex ECUs will need higher data rates.

A further disadvantage with current systems is that there is often there are several bus systems in whole architecture, which have to be are routed similarly (e.g. over a common connector).

It is an object of the invention to overcome these problems.

SUMMARY OF THE INVENTION

In one aspect is provided an on-board automotive system comprising: a plurality of processing units; wherein a first processing unit of said processing units is adapted to transmit data to one or more of said processing units via a common bus, where the first processing unit has a first convertor unit associated therewith, said first convertor unit being connected to a first bus of the first processing unit from which data is transmitted, said first bus comprising a first plurality of lines, and wherein said first convertor unit is adapted to convert data transmitted therefrom to one or more of said processing units in the form of a first single serial data stream along said common bus; wherein a second processing unit of said processing units is adapted to transmit data to one or more of said processing units via a common bus, where the second processing unit has a second convertor unit associated therewith, said second convertor unit being connected to a second bus of the second processing unit from which data is transmitted, said second bus comprising a second plurality of lines, and wherein said second convertor unit is adapted to convert data transmitted therefrom to one or more of said processing units in the form of a second single serial data stream along said common bus; wherein the first bus comprises one of the following: camera serial interface (CSI), Peripheral Component Interconnect (PCI), PCIe 2.0, PCIe 3.0, HDMI 1.4b, Sata, NVMe, Display Port; CSI II D-Phy, CSI II; GMSL, LVDS, USB 3.0, Reduced Gigabyte Media Independent Interface (RGMII), SGMII, XGMII, XAUI, CAN-FD, Flexray, GPIO, Ethernet, TSN; wherein the second bus comprises one of the following: camera serial interface (CSI), Peripheral Component Interconnect (PCI), PCIe 2.0, PCIe 3.0, HDMI 1.4b, Sata, NVMe, Display Port; CSI II D-Phy, CSI II; GMSL, LVDS, USB 3.0, Reduced Gigabyte Media Independent Interface (RGMII), SGMII, XGMII, XAUI, CAN-FD, Flexray, GPIO, Ethernet, TSN; and wherein the first bus and the second bus are of different bus design.

Said common bus may include a single line for serial transmission of data therealong.

One or more of said units may be an Electronic Control Unit.

Said processing unit may be a main vehicle ECU.

one or more of said processing units may be a radar and/or camera unit and/or Advanced Driver Assistance Systems (ADAS) unit.

Said first convertor unit and/or said second convertor unit may be adapted to modulate one or more carrier signals with the data to be transmitted .

Said first convertor unit and/or said second convertor unit may be adapted to modulate the data transmitted using one or more of the following transmission/modulation schemes: frequency division multiplexing (FDM); phase-shift keying (PSK); amplitude-shift keying (ASK); and quadrature amplitude modulation (QAM); and Orthogonal frequency-division multiplexing (OFDM).

In a further aspect is provided a method of transmitting data from a first processing unit of a vehicle to one or more other processing units of said vehicle and for transmitting data from a second processing unit to one or more other processing units, the method comprising transmitting said data serially along a common bus, comprising the steps of: a) receiving data from a first bus of said first processing unit, said first bus comprising a first plurality of lines; b) converting said received data to a first single serial data stream; c) transmitting said first serial data stream along said common bus; d) receiving data from a second bus of said second processing unit, said second bus comprising a second plurality of lines; e) converting said received data to a second single serial data stream; f) transmitting said second serial data stream along said common bus; wherein the first bus comprises one of the following: camera serial interface (CSI), Peripheral Component Interconnect (PCI), PCIe 2.0, PCIe 3.0, HDMI 1.4b, Sata, NVMe, Display Port; CSI II D-Phy, CSI II; GMSL, LVDS, USB 3.0, Reduced Gigabyte Media Independent Interface (RGMII), SGMII, XGMII, XAUI, CAN-FD, Flexray, GPIO, Ethernet, TSN; wherein the second bus comprises one of the following: camera serial interface (CSI), Peripheral Component Interconnect (PCI), PCIe 2.0, PCIe 3.0, HDMI 1.4b, Sata, NVMe, Display Port; CSI II D-Phy, CSI II; GMSL, LVDS, USB 3.0, Reduced Gigabyte Media Independent Interface (RGMII), SGMII, XGMII, XAUI, CAN-FD, Flexray, GPIO, Ethernet, TSN; and wherein the first bus and the second bus are of different bus design.

Said common bus may comprise or include a single line for serial transmission of data there along.

One or more of said units is an Electronic Control Unit.

Said processing unit may be a main vehicle ECU.

Said one or more of said processing units may be a radar and/or camera unit and/or Advanced Driver Assistance Systems (ADAS) unit.

Said converting step b) may include modulating one or more carrier signals with the data transmitted.

Said modulation of data may use one or more of the following transmission/modulation schemes: frequency division multiplexing (FDM); phase-shift keying (PSK); amplitude-shift keying (ASK); and quadrature amplitude modulation (QAM):

## BRIEF DESCRIPTION OF THE DRAWINGS

The present invention is now described by way of example with reference to the accompanying drawings in which:

- Figure 1 shows a prior art system architecture in a vehicle typically used for ADAS systems;
- Figure 2 shows an example of the invention;
- Figure 3 shows a single common bus system, according to one example which may be used to connect two or more ECUs.
- Figure 4 illustrates a further application of aspects of the invention;
- Figures 5a and 5b show transceivers according to examples of the invention;
- Figure 6 illustrates an OFDM (Orthogonal Frequency-Division Multiplexing) scheme used in aspects;
- Figure 7 shows a QAM symbol mapping scheme used in one example;
- Figure 8 shows the element of a cascaded transceiver used in one example;
- Figure 9 shows a typical output spectrum of the transmitter;
- Figure 10a and b shows transmitter hardware according to one example; and

## DESCRIPTION OF THE PREFERRED EMBODIMENTS

According to a simple example of the invention the problem of routing several busses (or bus types) in parallel is solved by using a common serial bus system which is connected to all processing units/ECUs/(sub-)systems of the vehicle architecture, and where data is transmitted serially. The problem of routing a lot of different signal lines is solved by using a single line for transmitting and a single line for receiving data or a single line for both receiving and transmitting data. In aspects data is transferred between vehicle processors/systems and ECUs using the same transmission scheme. The schemes may be varied and can similar to those used in mobile telecommunication systems. In aspects the bus system according to examples aggregates several high speed busses with a high pin count to only one common bus with one or two signal pairs (full-duplex or TX/RX pairs).

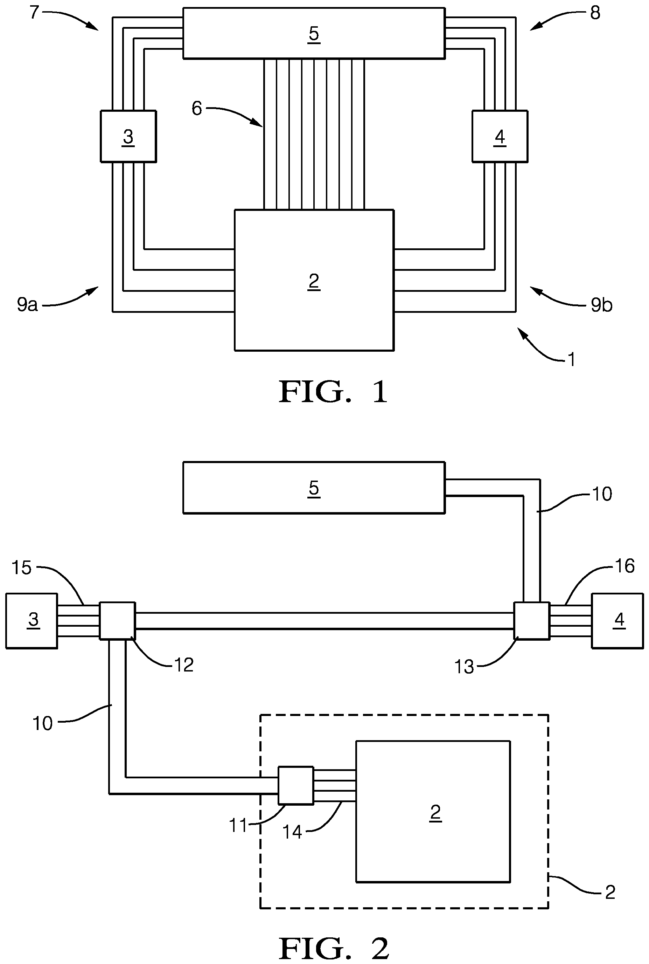

Figure 1 shows prior art system architecture in a vehicle typically used for ADAS systems. The figure shows (sub-) systems 2, 3 and 4 of the architecture. In an example system 2 may be regarded as a master system and sub-systems 3 and 4 regarded as slave systems. Each may be regarded as an ECU. In an example the sub-system 2 may be the main vehicle ECU or control overall functionality, and subsystems 3 and 4 may be subsystems of an ADAS system. They can be manifested as integrated circuits i.e. chips or blocks of integrated circuits or modular circuit boards.. Each system 2, 3, and 4 is connected directly to a connector 5 via buses 6, 7, and 8 respectively. The bus 7 may be a Reduced Gigabyte Media Independent Interface (RGMII), the, bus 8 may be a CSI-2. Subsystem 2 is connected by bus 9a to subsystem 3 and also to subsystem 4 by bus 9b. Bus 9a may be PCIe and bus 9b may be a USB 3.0. As shown by the figure the buses each comprise several wires/lines each, and can be of varying types/designs. The inherent problems of such architecture are apparent.

Figure 2 shows an example of the invention. Similar components have the same reference numeral as figure 1. In the example all the components subsystems 2, 3, 4, as well as connector 5 are connected to a serial common bus 10.. In examples of the invention the bus comprises a single line or a line pair as in the figure. As each system may be somewhat different, the systems are connected to the single bus via convertor (intermediate) units 11,12, 13 such that data going to or from the subsystem is in the correct format/uses the same protocol/scheme for the serial data transmission system i.e. along bus 10. The convertor unit, in examples, can also be regarded as a transmitter, receiver or transceiver unit; this will be described in more detail hereinafter. Generally they comprise modulator or demodulator means. Signals i.e. data out from a parallel bus of the system or processing unit, are combined and then modulated for transmission and/or signals received by the converter are demodulated and then split (decombined) and forwarded on the appropriate lines of the parallel bus system of the (sub-)system or processing unit. For sub-systems 3 and 4 there are buses 15 and 16 to the respective converter which may be a the same bus designs/types as any of buses 7, 8, 9a and 9b of figure 1. For sub-system 4 there may be a bus 14 to the respective converter which is may again be any bus design. The convertor units thus act as interfaces between the common bus 10 and the other buses.

It is to be noted that for one or more of the systems 2, 3 and 4, the convertor units (and thus interfaces via respective buses 14,15 and 16) may be integral with the system i.e. on the same circuit board or part of the same integrated circuit as the system, as shown by the dotted line for system 2. The main advantage in the convertor unit being part of the system integrated circuit is better and easier signal routing on the PCB and therefore the reduction of engineering effort.

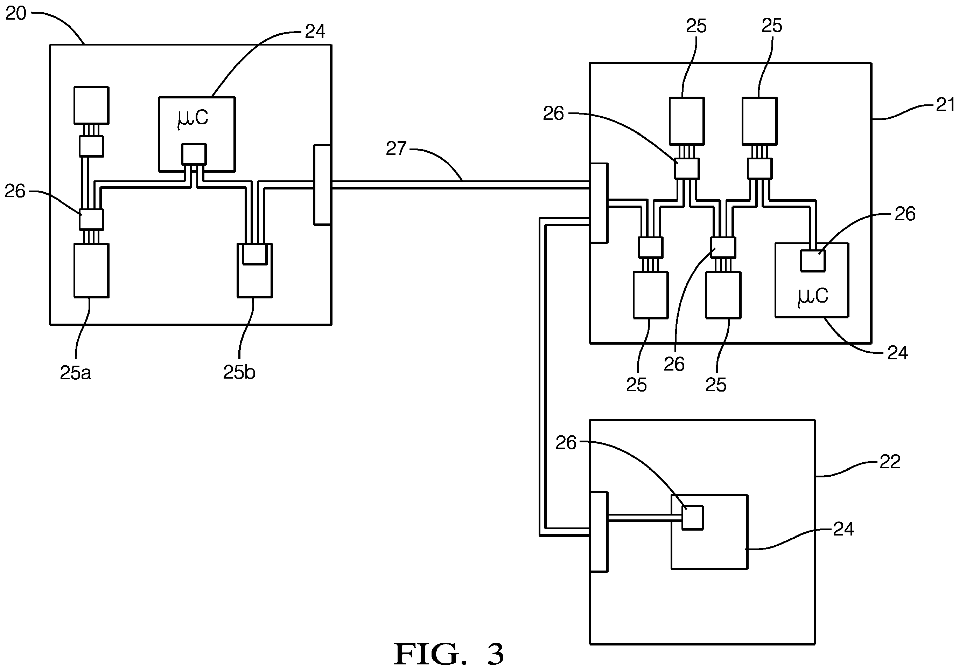

In embodiments, the single common bus system, may be used to connect two or more ECUs. This is shown in figure 3 where the main advantage is, that there is a big saving in cabling. High speed connections require dedicated cables (often coaxial) with expensive connectors and so each saving can reduce system costs. In the figure a first ECU/system 20 is connected to a second ECU/system 21 which is connected to a third ECU/system 22. This is via common serial bus 27 via e.g. a single link or as described above which may be a copper or fiber optic. The term "serial" bus again can be considered as a bus where data is transmitted and/or received along a single line. So the bus may comprise one line or two lines for respective transmission and reception. So again this may be single line for transmitting and a single line for receiving data or a single line for both receiving and transmitting data. In each ECU includes a microprocessor 24 and optionally one or more ECU sub-units/systems 25a and 25b, each of which is provided with a convertor 26. For ECU 20, 21, and 22 the convertor is shown integral with the ECU.

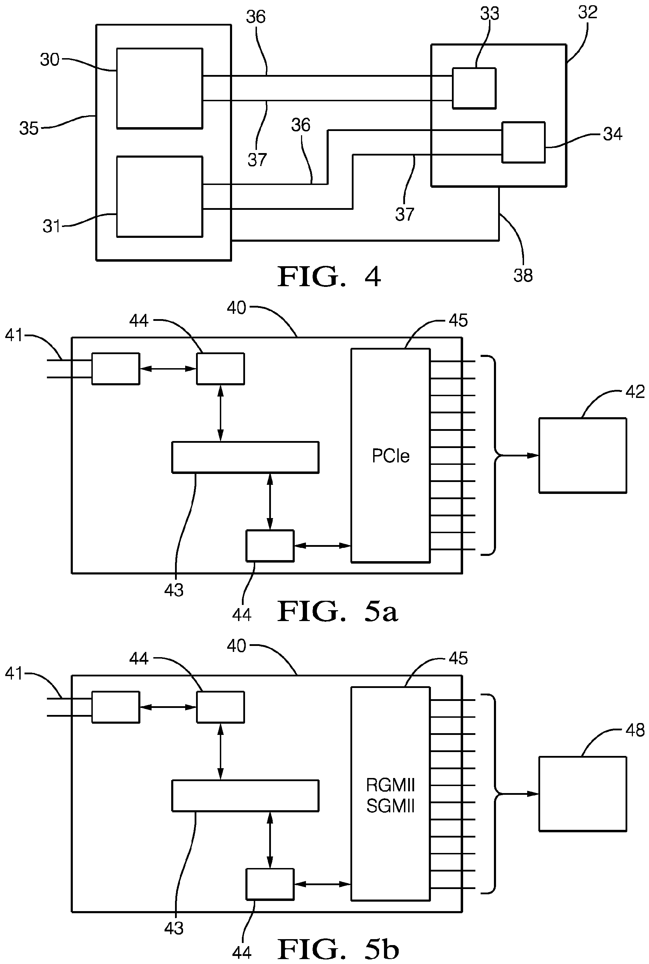

Figure 4 shows a prior art ADAS system. Figure 4 shows a Camera Unit 30 and Radar Unit 31 which may be considered part of an overall ADAS unit 35 connected to ADAS ECU 32. The ADAS ECU is divided into vision subsystem/ECU 33 and a radar subsystem/ECU 34. For each of the camera and the radar functions a dedicated high speed (data) output lines 36 are required, which connect respective units 30, 31 to units 33 and 34. To control the camera or the radar systems, there is also provided (again for each of the units 30 and 31) data lines/ buses 37 are provided, connecting units 30 and 31 with units 33 and 34 respectively. A power line 38 may be provided connected between the unit 32 and 35. Although the data connectivity is shown by two lines/buses 36 and 37 in practice these may comprise several lines each.

In an embodiment of the invention both the camera unit and the radar units/systems have their respective bus lines connected to a convertor unit. This is then connected to a unit via a high speed common serial bus according to examples of the invention described above. This is connected to a converter unit located as part of the ADAS ECU system. The converter unit is in turn connected to sub-units/systems. The converter unit units ensure that communications along the bus uses the protocol for the bus. So to summarise, in an example, all data and high speed busses of the prior art system of figure 4 are combined on a single very high speed bus. So camera and radar systems are connected via usual links (power data and high speed) to a common converter unit (transmitter /transceiver) (alternatively each may have its own) which provides a modulated output on single or twin line bus to the ADAS ECU. It is to be noted that the converter units may provide functionality to convert data from different bus designs (for transmission or reception or both) for the common bus; in other words the converter units may have multiple functionality/conversion capability in this respect.

Thus in examples the bus is universal and connects/communicates via the convertor essentially to any type of bus i.e. to a high variety of busses, used by systems which connect to the universal bus. As mentioned to provide access of the bus to or from a plurality of data lines of individual type buses connected to a system, there is provided an converter unit; i.e. which may be a special (MAC/PHY) transceiver, which adapts the high speed (parallel) bus of the system to a serialized signal data stream (in respect of transmission reception or both) to be communicated on the serial common bus to allow access of the systems/units/ECUs to the bus. The converter unit (transceiver) can control the data flow on the bus and can control link quality. To connect more devices, it is possible to expand the bus with additional e.g.(MAC/PHY) transceivers.

Each transceiver may have its own dedicated bus connection, for example a PCIe 2.0 or USB3.0 port. Each port may operate as a bidirectional input/output. Transceivers/converter units of a plurality (e.g. related) busses (e.g. network: RGMII/SGMII) may implemented using a single integrated IC, which may be configurable.

Figures 5a and 5b show convertor units (transmitters/transceivers) according to examples of the invention. Figure 5a show a transceiver (converter unit) 40 (which could be used for units 40, 39, 26, 12, 13, 14 of the previous figures) adapted to connect the serial universal bus 41 a (sub-)system 42 which utilizes in this example a PCIe bus system 45. The convertor unit/transceiver includes a central control unit 43 connected to MAC (Media Access Control) layer units 44 adapted to provide suitable communication for the common/serial bus line 41 and the PCIe bus respectively via connector 46 for the common bus and the 45 for the PCIe bus. Figure 5b shows a similar figure and arrangement or a RGMII and SGMII bus connection to system 48.

The transceiver/converter unit can also be implemented in a system on chip (SoC) where a Field Programmable Gate Array (FPGA) or ASIC part in included.

The bus according to examples can be implemented on a single PCB only, or used to connect to other PCBs to each other.

The bus may be physically manifested by a copper cable or PCB trace or for higher data rates, may use a fiber optic link/cable. For higher data rates copper cable may also be utilized depending on requirements and configuration specification.

Further Details

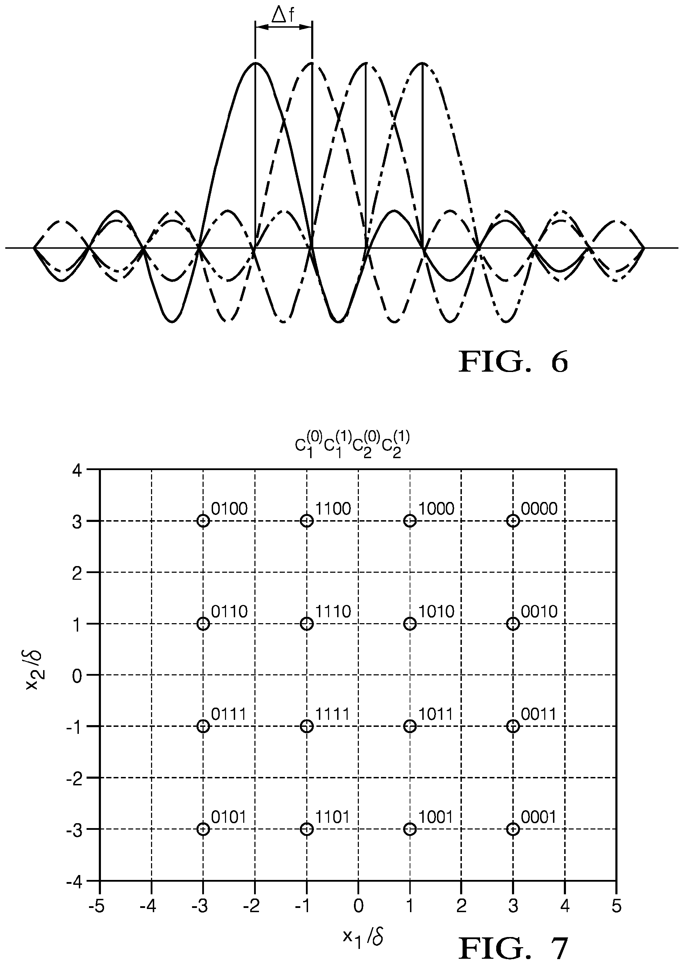

The bus system and convertors units may use various protocols or data transmission schemes. Such schemes are used in wireless communication systems. In preferred example, OFDM (Orthogonal Frequency-Division Multiplexing) is used. In this case the payload on one single frequency is divided into a multiple of frequencies/carriers e.g. with small offset. The frequency, respectively the offset ($\Delta f$) is selected in this way, so that the harmonics have the lowest influence on adjacent frequencies. This is shown in figure 6.

Thus payload data to be transmitted between units/system can be split into several frequencies for transmission along the common serial bus. The amount of different frequencies depends on the maximum available bandwidth of the channel and the desired frequency offset.

For this proposal the number of subcarriers is specified with N=1024 (but also 2048, $2^x$ is possible). Each subcarrier may contain one part of information of the payload. To have a better efficiency on this payload, a modulation scheme is used. For this proposal the 16-QAM (Quadrature amplitude modulation) can be used (but also 64-QAM / 256-QAM / ... is possible). Figure 7 shows a QAM symbol mapping.

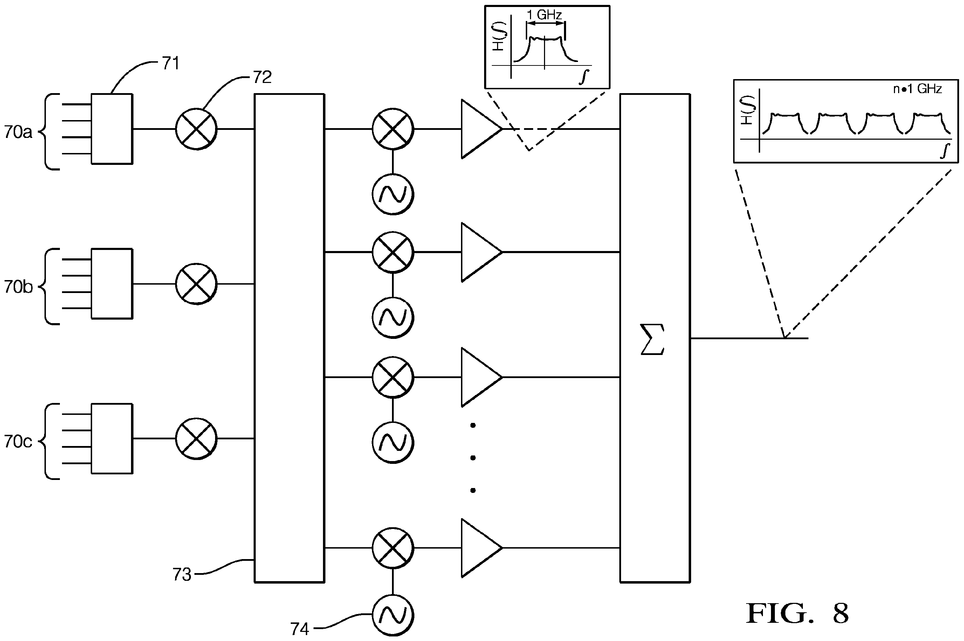

One challenge in OFDM systems is the linearity over frequency and magnitude of the output signal at the transmitter. For a high bandwidth output, it is nearly impossible to have a linear frequency response. To handle this problem, several output stages of small bandwidth may be combined to an array of transceivers. This has the advantage, that every output stage has only limited bandwidth and so is easy to implement. For this, the bandwidth of each output element may be limited to IGHz but other bandwidths are possible. Also the data rate of each path may be limited. Due to the cascading of the elements, the sum data rate is sufficiently high. Figure 8 shows the elements of a simplified cascaded convertor unit (transmitter) which will be described in more detail hereinafter. For this proposal the input data rate for each OFDM subassembly is set to 1,25GBit/s. With all this values, the channel offset can be calculated as:

$$\Delta f_k = \frac{1}{T_s \cdot \log_2(M) \cdot N},$$

With M the QAM Modulation Index, $T_s$ the symbol duration of one Bit and N the total amount of sub carriers. With the previous defined values, $\Delta f_k$ is calculated as:

$$\Delta f_k = \frac{1}{\frac{1}{1,25GBit/s} \cdot \log_2(16) \cdot 1024} = 306kHz.$$

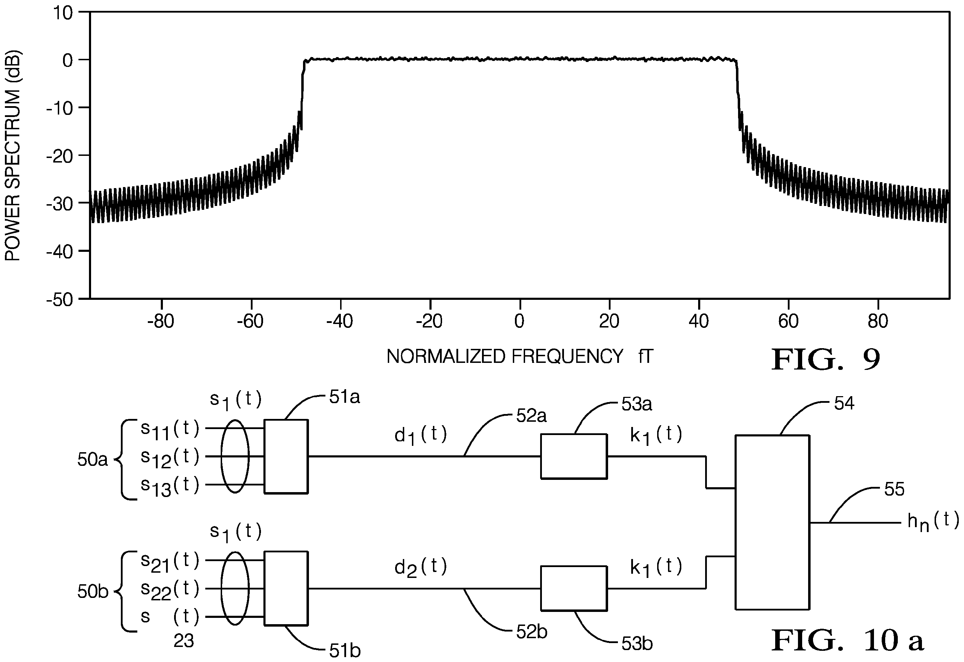

Figure 9 shows a typical output spectrum of the converter unit/transmitter. The shown signal uses in maximum the bandwidth of IGHz. Each entity in the final chip uses IGHz of bandwidth, with an adjustable center frequency. With this behavior it is easy to cascade several of this units to one very high bandwidth combined channel. Also to achieve a full duplex architecture this fact is very helpful. Depending on the demand of bandwidth for the backchannel, the transmitters/convertor units can negotiate how to share and allocate the bunch of 1GHz sub channels. If there is low demand of a backchannel or in general of payload to transmit, the protocol can for instance reduce the modulation depth of the QAM system (do reduce bit errors / energy consumption / etc.) or re align the used frequency range to optimized bands (for example if there is EMI in some bands).

Converter Unit (Transmitter) realization

As mention in examples several (high speed) busses can effectively combined on one high speed link which may comprise a serial data bus. Possible busses can be: PCIe 2.0 / PCIe 3.0 up to 8 lanes; HDMI 1.4b;

Sata; NVMe; Display Port (consumer /infotainment applications); CSI II D-Phy up to 4 lanes (CSI II); GMSL (2.0); LVDS; proprietary protocols for single line buses for; USB 3.0; RGMII / SGMII / XGMII / XAUI; CAN-FD; Flexray; GPIO; Ethernet (Time Triggered, TSN)

In each case, each bus has its own characteristics. For example, the PCIe 3.0 bus has several high speed differential data and clock lines, on the other hand a general purpose Low Voltage Differential Signaling (LVDS) signal consist only of one pair with undefined clock rate.

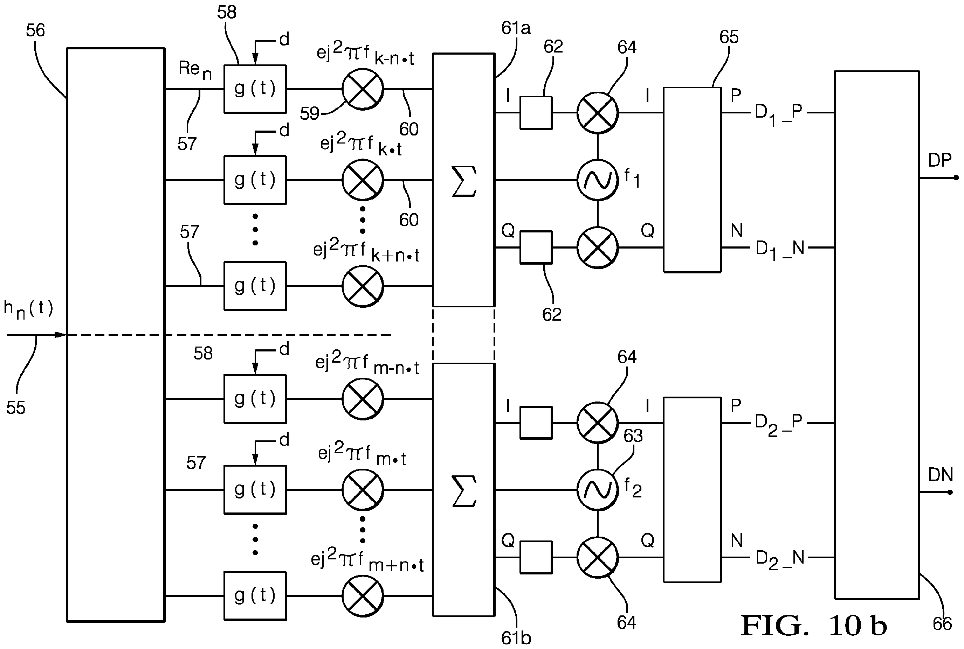

Figure 10a and b shows transmitter/convertor hardware which enables data provided on one or more buses to be transmitted on a single line. Thus this may form the adaptor/converter as described above. It is to be noted that in the figure is shown hardware used to transmit data from two bus types to be transmitted and combined along a single line. So it should be noted than in the figures, data from two buses /bus systems are transmitted to a single line or two lines) one for transmission one for reception); e.g. if a processor or ECU has two bus system outputs. It should be understood that the design can be simplified somewhat to transmit data only from a single bus system, or upgrades to provide an output from more than two bus systems.

So the figure shows apparatus where data from two specific (dedicated) bus systems are transmitted via a single common (serial bus).

Two portions of the transmitter/converter are shown in figures 10a and 10b. With respect to figure 10a the input to the transmitter is from one or more individual (dedicated) buses/bus systems buses. In the figure are shown inputs from two bus systems 50a and 50b. Each bus system may comprise a plurality of bus lines which may comprise e.g. 16 or 32 bus line or indeed may comprise any number of bus lines. In the figure for clarity each bus system is shown with three lines. Bus lines from buses 50a and 50b (with signals designated as $s_1$(z) and $s_2$(z)) are input to serialisers 51a and 51b respectively. So for each of one or more of each bus type it deals with, (in the example HDMI and PCIe) the input designated generally $s_n$(z) is input to respective combiner which collects all dedicated lines of each bus [$s_{11}$(z)] to [$s_{1n}$(z)] or $s_{21}$(z)] to [$s_{2n}$(z)] and converts them to a high speed single stream(s) 52a, 52b designated [$d_1$(z)], [$d_2$(z)], in respect of each bus. After this these signals are input to modulators in order to modulate the input signals according to the transmission scheme. In the example here the two respective modulators 53a and 53b are Quadrature Amplitude Modulators (e.g. 16 bit so in this case), so 16-QAM is applied to each the signal 52 [$d_1$(z)], [$d_2$(z)], etc. shown by boxes 53. The resulting output digital stream kl(z) and k2(z) are input to a serialiser/combiner unit 54 which essential further serializes of combines the single line data $h_n$(z) from each of the buses. It should be noted that where there is only one bus system input to the transmitter, this unit 54 may be omitted. The unit 54, as well as combining signals, may have the additionally the task to load balance the data streams.

The output of unit 54 is a single line 55 which is then, seen in figure 10b, input to a deserializer/ splitter device 56 which divide the signal 55 into separate carriers 57 (for sub-frequencies),designated individually as Re(1) Re(2) ..... So effectively the deserializer/splitter 56 processes input data and dynamically routes the (channelised) data streams to the following blocks. Block 56 can also be regarded as a channeliser. After load balancing, the signals output from 56 are filtered by filter blocks 58 (a channel filter) each representing a filter function g(z) and then frequency shifted (e.g. by Inverse Discrete Fourier Transform) by mixer units 59. The frequency shifted signals 60 are then summed in combiner integrator unit 61. There may be separate combiners 61a and 61b in respect of the signals corresponding to the input from the separate bus systems. So after splitting into several frequencies, the aggregation of n channels is performed. This aggregation by combiner 61 results in two data streams for I and Q which are each (e.g. to IGHz wide data streams handled separately). Each stream I and Q are converted to analogue signals by Digital to Analogue converters 62, and then modulated by an oscillator 63 output and mixer 64. Lastly where there are inputs from more than one bus system, the respective modulated I and Q outputs are converted to a differential pair (65) (for each bus) is combined at RF combiner 66 (combined with the respective signals from the other stages). The output is a single pair of P and N lines, which can these be transmitted on a single line (e.g. fibre optic) or on a differential pair (copper).

Figure 8 shows a simplified figure of a transmitter having the same functionality as described above. Again the input lines for each bus system is input to respective serialisers 71 and then at unit they are input and processed to channelize the data with the use of mixers 72 and then to aggregated and split to different channels in channeliser 73 where oscillator 74 modulate the outputs, which are then summed by combiner 75 before outputting.

The skilled person would readily understand and be able to construct receiver which receive the modulated data and converts them to data in the correct format for transfer along individual buses to the respective units/ECUs. Demodulation techniques are widely used in the art.

Prior art only uses dedicated busses for each application. Aspects of the invention provide it is easy to provide a huge amount of different high speed busses to different locations with only one common bus. The big advantage is the reduced pin count and therefore the better EMC performance. The effort for signal routing can dramatically be reduced. Secondly the needed space for high speed signaling can be reduced. For external connections (to a second PCB), the pin count of the connector can be reduced.

The problem of limited data rates can be solved by calculating sufficient reserves in data rate (e.g. up to 50/100Gbit/s aggregated bandwidth) The problem of signal integrity issues can be solved by keeping dedicated bus length very short and cleanly routed.

**Claims**

1. An on-board automotive system (1) comprising:

    a plurality of processing units (2,3,4);
    wherein a first processing unit (2,3,4) of said processing units (2,3,4) is adapted to transmit data to one or more of said processing units via a common bus (10), where the first processing unit has a first convertor unit (11, 12, 13) associated therewith, said first convertor unit being connected to a first bus (14, 15, 16) of the first processing unit from which data is transmitted, said first bus comprising a first plurality of lines, and wherein said first convertor unit (11, 12, 13) is adapted to convert data transmitted therefrom to one or more of said processing units in the form of a first single serial data stream along said common bus;
    wherein a second processing unit (2,3,4) of said processing units (2,3,4) is adapted to transmit data to one or more of said processing units via a common bus (10), where the second processing unit has a second convertor unit (11, 12, 13) associated therewith, said second convertor unit being connected to a second bus (14, 15, 16) of the second processing unit from which data is transmitted, said second bus comprising a second plurality of lines, and wherein said second convertor unit (11, 12, 13) is adapted to convert data transmitted therefrom to one or more of said processing units in the form of a second single serial data stream along said common bus;
    wherein the first bus comprises one of the following: camera serial interface (CSI), Peripheral Component Interconnect (PCI), PCIe 2.0, PCIe 3.0, HDMI 1.4b, Sata, NVMe, Display Port; CSI II D-Phy, CSI II; GMSL, LVDS, USB 3.0, Reduced Gigabyte Media Independent Interface (RGMII), SGMII, XGMII, XAUI, CAN-FD, Flexray, GPIO, Ethernet, TSN;
    wherein the second bus comprises one of the following: camera serial interface (CSI), Peripheral Component Interconnect (PCI), PCIe 2.0, PCIe 3.0, HDMI 1.4b, Sata, NVMe, Display Port; CSI II D-Phy, CSI II; GMSL, LVDS, USB 3.0, Reduced Gigabyte Media Independent Interface (RGMII), SGMII, XGMII, XAUI, CAN-FD, Flexray, GPIO, Ethernet, TSN; and
    wherein the first bus and the second bus are of different bus design.

2. A system as claimed in claim 1 where said common bus (10) includes a single line for serial transmission of data therealong.

3. A system as claimed in claims 1 or 2 wherein one or more of said units is an Electronic Control Unit.

4. A system as claimed in claims 1 to 3 where one of said processing unit is a main vehicle ECU.

5. A system as claimed in claim 1 to 4 wherein one of said processing units is a radar and/or camera unit and/or Advanced Driver Assistance Systems (ADAS) unit.

6. A system as claimed in claims 1 to 5 where said first convertor unit and/or said second convertor unit is adapted to modulate one or more carrier signals with the data to be transmitted.

7. A system as claimed in claim 6 wherein said first convertor unit and/or said second convertor unit is adapted to modulate the data transmitted using one or more of the following transmission/modulation schemes: frequency division multiplexing (FDM); phase-shift keying (PSK); amplitude-shift keying (ASK); and quadrature amplitude modulation (QAM); and Orthogonal frequency-division multiplexing (OFDM).

8. A method of transmitting data from a first processing unit of a vehicle to one or more other processing units of said vehicle and for transmitting data from a second processing unit to one or more other processing units, the method comprising transmitting said data serially along a common bus, comprising the steps of:

    a) receiving data from a first bus of said first processing unit, said first bus comprising a first plurality of lines;
    b) converting said received data to a first single serial data stream;
    c) transmitting said first serial data stream along said common bus;
    d) receiving data from a second bus of said second processing unit, said second bus comprising a second plurality of lines;
    e) converting said received data to a second single serial data stream;
    f) transmitting said second serial data stream along said common bus;

        wherein the first bus comprises one of the following: camera serial interface (CSI), Peripheral Component Interconnect (PCI), PCIe 2.0, PCIe 3.0, HDMI 1.4b, Sata, NVMe, Display Port; CSI II D-Phy, CSI II; GMSL, LVDS, USB 3.0, Reduced Gigabyte Media Independent Interface (RGMII), SGMII, XGMII, XAUI, CAN-FD, Flexray, GPIO, Ethernet, TSN;

wherein the second bus comprises one of the following: camera serial interface (CSI), Peripheral Component Interconnect (PCI), PCIe 2.0, PCIe 3.0, HDMI 1.4b, Sata, NVMe, Display Port; CSI II D-Phy, CSI II; GMSL, LVDS, USB 3.0, Reduced Gigabyte Media Independent Interface (RGMII), SGMII, XGMII, XAUI, CAN-FD, Flexray, GPIO, Ethernet, TSN; and

wherein the first bus and the second bus are of different bus design.

9. A method as claimed in claim 8 wherein said common bus includes a single line for serial transmission of data there along.

10. A method as claimed in claims 8 or 9 wherein one or more of said units is an Electronic Control Unit.

11. A method as claimed in claims 8 to 10 where one of said processing unit is a main vehicle ECU.

12. A method as claimed as claimed in claims 8 to 11 wherein one of said processing units is a radar and/or camera unit and/or Advanced Driver Assistance Systems (ADAS) unit.

13. A method as claimed in claims 8 to 12 where said converting step b) includes modulating one or more carrier signals with the data transmitted.

14. A method as claimed in claim 13 wherein said modulation of data uses one or more of the following transmission/modulation schemes: frequency division multiplexing (FDM); phase-shift keying (PSK); amplitude-shift keying (ASK); and quadrature amplitude modulation (QAM).

**Patentansprüche**

1. Bordeigenes Kraftfahrzeugsystem (1), das umfasst:

eine Vielzahl von Verarbeitungseinheiten (2, 3, 4);

wobei eine erste Verarbeitungseinheit (2, 3, 4) der Verarbeitungseinheiten (2, 3, 4) angepasst ist, um Daten über einen gemeinsamen Bus (10) an eine oder mehrere der Verarbeitungseinheiten zu übertragen, wobei die erste Verarbeitungseinheit eine erste Wandlereinheit (11, 12, 13) aufweist, die dieser zugeordnet ist, wobei die erste Wandlereinheit mit einem ersten Bus (14, 15, 16) der ersten Verarbeitungseinheit verbunden ist, von der Daten übertragen werden, wobei der erste Bus eine erste Vielzahl von Leitungen umfasst und wobei die erste Wandlereinheit (11, 12, 13) angepasst ist, um Daten, die von dort aus an eine oder mehrere der Verarbeitungseinheiten übertragen werden, in die Form eines ersten einzelnen seriellen Datenstroms entlang des gemeinsamen Busses umzuwandeln;

wobei eine zweite Verarbeitungseinheit (2, 3, 4) dieser Verarbeitungseinheiten (2, 3, 4) angepasst ist, um Daten über einen gemeinsamen Bus (10) an eine oder mehrere dieser Verarbeitungseinheiten zu übertragen, wobei die zweite Verarbeitungseinheit eine zweite Wandlereinheit (11, 12, 13) aufweist, die dieser zugeordnet ist, wobei die zweite Wandlereinheit mit einem zweiten Bus (14, 15, 16) der zweiten Verarbeitungseinheit verbunden ist, von der Daten übertragen werden, wobei der zweite Bus eine zweite Vielzahl von Leitungen umfasst und wobei die zweite Wandlereinheit (11, 12, 13) angepasst ist, um Daten, die von dort an eine oder mehrere der Verarbeitungseinheiten übertragen werden, in die Form eines zweiten einzelnen seriellen Datenstroms entlang des gemeinsamen Busses umzuwandeln;

wobei der erste Bus einen der folgenden umfasst: Camera Serial Interface (CSI), Peripheral Component Interconnect (PCI), PCIe 2.0, PCIe 3.0, HDMI 1.4b, Sata, NVMe, Display Port; CSI II D-Phy, CSI II; GMSL, LVDS, USB 3.0, Reduced Gigabyte Media Independent Interface (RGMII), SGMII, XGMII, XAUI, CAN-FD, Flexray, GPIO, Ethernet, TSN;

wobei der zweite Bus einen der folgenden umfasst: Camera Serial Interface (CSI), Peripheral Component Interconnect (PCI), PCIe 2.0, PCIe 3.0, HDMI 1.4b, Sata, NVMe, Display Port; CSI II D-Phy, CSI II; GMSL, LVDS, USB 3.0, Reduced Gigabyte Media Independent Interface (RGMII), SGMII, XGMII, XAUI, CAN-FD, Flexray, GPIO, Ethernet, TSN; und

wobei der erste Bus und der zweite Bus ein unterschiedliches Busdesign aufweisen.

2. System nach Anspruch 1, wobei der gemeinsame Bus (10) eine einzige Leitung enthält, um Daten entlang dieser Leitung seriell zu übertragen.

3. System nach Anspruch 1 oder 2, wobei eine oder mehrere dieser Einheiten eine elektronische Steuereinheit (ECU) ist/sind.

4. System nach Anspruch 1 bis 3, wobei eine dieser Verarbeitungseinheiten eine Haupt-ECU des Fahrzeugs ist.

5. System nach Anspruch 1 bis 4, wobei eine dieser Verarbeitungseinheiten eine Radar- und/oder Kameraeinheit und/oder eine ADAS-Einheit (Advanced Driver Assistance System) ist.

6. System nach Anspruch 1 bis 5, wobei die erste Wandlereinheit und/oder die zweite Wandlereinheit angepasst ist/sind, um ein oder mehrere Trägersignale mit den zu übertragenden Daten zu modulieren.

7. System nach Anspruch 6, wobei die erste Wandlereinheit und/oder die zweite Wandlereinheit angepasst ist/sind, um die übertragenen Daten unter Verwendung eines oder mehrerer der folgenden Übertragungs-/Modulationsschemata zu modulieren: Frequenzmultiplex (FDM); Phasenumtastung (PSK); Amplitudenumtastung (ASK); und Quadratur-Amplitudenmodulation (QAM); und Orthogonal-Frequenzmultiplex (OFDM).

8. Verfahren zum Übertragen von Daten von einer ersten Verarbeitungseinheit eines Fahrzeugs an eine oder mehrere andere Verarbeitungseinheiten des Fahrzeugs und zum Übertragen von Daten von einer zweiten Verarbeitungseinheit an eine oder mehrere andere Verarbeitungseinheiten, wobei das Verfahren das serielle Übertragen der Daten entlang eines gemeinsamen Busses umfasst, mit den Schritten:

   a) Empfangen von Daten von einem ersten Bus der ersten Verarbeitungseinheit, wobei der erste Bus eine erste Vielzahl von Leitungen umfasst;
   b) Umwandeln der empfangenen Daten in einen ersten einzelnen seriellen Datenstrom;
   c) Übertragen des ersten seriellen Datenstroms entlang des gemeinsamen Busses;
   d) Empfangen von Daten von einem zweiten Bus der zweiten Verarbeitungseinheit, wobei der zweite Bus eine zweite Vielzahl von Leitungen umfasst;
   e) Umwandeln der empfangenen Daten in einen zweiten einzelnen seriellen Datenstrom;
   f) Übertragen des zweiten seriellen Datenstroms entlang des gemeinsamen Busses;

   wobei der erste Bus einen der folgenden umfasst: Camera Serial Interface (CSI), Peripheral Component Interconnect (PCI), PCIe 2.0, PCIe 3.0, HDMI 1.4b, Sata, NVMe, Display Port; CSI II D-Phy, CSI II; GMSL, LVDS, USB 3.0, Reduced Gigabyte Media Independent Interface (RGMII), SGMII, XGMII, XAUI, CAN-FD, Flexray, GPIO, Ethernet, TSN;
   wobei der zweite Bus einen der folgenden umfasst: Camera Serial Interface (CSI), Peripheral Component Interconnect (PCI), PCIe 2.0, PCIe 3.0, HDMI 1.4b, Sata, NVMe, Display Port; CSI II D-Phy, CSI II; GMSL, LVDS, USB 3.0, Reduced Gigabyte Media Independent Interface (RGMII), SGMII, XGMII, XAUI, CAN-FD, Flexray, GPIO, Ethernet, TSN; und
   wobei der erste Bus und der zweite Bus ein unterschiedliches Busdesign aufweisen.

9. Verfahren nach Anspruch 8, wobei der gemeinsame Bus eine einzige Leitung enthält, um Daten entlang dieser Leitung seriell zu übertragen.

10. Verfahren nach Anspruch 8 oder 9, wobei eine oder mehrere dieser Einheiten eine elektronische Steuereinheit (ECU) ist/sind.

11. Verfahren nach Anspruch 8 bis 10, wobei eine dieser Verarbeitungseinheiten eine Haupt-ECU des Fahrzeugs ist.

12. Verfahren nach Anspruch 8 bis 11, wobei eine der Verarbeitungseinheiten eine Radar- und/oder Kameraeinheit und/oder eine ADAS-Einheit (Advanced Driver Assistance System) ist.

13. Verfahren nach Anspruch 8 bis 12, wobei der Umwandlungsschritt b) die Modulation eines oder mehrerer Trägersignale mit den übertragenen Daten umfasst.

14. Verfahren nach Anspruch 13, wobei die Modulation von Daten eines oder mehrere der folgenden Übertragungs-/Modulationsschemata verwendet: Frequenzmultiplex (FDM); Phasenumtastung (PSK); Amplitudenumtastung (ASK); und Quadratur-Amplitudenmodulation (QAM).

**Revendications**

1. Système automobile embarqué (1) comprenant :

   une pluralité d'unités de traitement (2, 3, 4) ;
   dans lequel une première unité de traitement (2, 3, 4) desdites unités de traitement (2, 3, 4) est adaptée pour transmettre des données à une ou plusieurs desdites unités de traitement via un bus commun (10), où la première unité de traitement a une première unité de conversion (11, 12, 13) associée à elle-même, ladite première unité de conversion étant connectée à un premier bus (14, 15, 16) de la première unité de traitement à partir de laquelle des données sont transmises, ledit premier bus comprenant une première pluralité de lignes, et dans lequel ladite première unité de conversion (11, 12, 13) est adaptée pour convertir des données transmises depuis elle-même à une ou plusieurs desdites unités de traitement sous la forme d'un premier flux de données sérielles unique le long dudit bus commun ;

dans lequel une seconde unité de traitement (2, 3, 4) desdites unités de traitement (2, 3, 4) est adaptée pour transmettre des données à une ou plusieurs desdites unités de traitement via un bus commun (10), où la seconde unité de traitement a une seconde unité de conversion (11, 12, 13) associé à elle-même, ladite seconde unité de conversion étant connectée à un second bus (14, 15, 16) de la seconde unité de traitement à partir de laquelle des données sont transmises, ledit second bus comprenant une seconde pluralité de lignes, et dans lequel ladite seconde unité de conversion (11, 12, 13) est adaptée pour convertir des données transmises depuis elle-même à une ou plusieurs desdites unités de traitement sous la forme d'un second flux de données sérielles unique le long dudit bus commun ;

dans lequel le premier bus comprend une des interfaces suivantes : interface sérielle de caméra (CSI), interface « Peripheral Component Interconnect » (PCI), PCIe 2.0, PCIe 3.0, HDMI 1.4b, Sata, NVMe, Display Port ; CSI II D-Phy, CSI II ; GMSL, LVDS, USB 3.0, Reduced Gigabyte Media Independant Interface (RGMII), SGMII, XGMII, XAUI, CAN-FD, Flexray, GPIO, Ethernet, TSN ;

dans lequel le second bus comprend une des interfaces suivantes : interface sérielle de caméra (CSI), interface « Peripheral Component Interconnect » (PCI), PCIe 2.0, PCIe 3.0, HDMI 1.4b, Sata, NVMe, Display Port ; CSI Port II D-Phy, CSI II ; GMSL, LVDS, USB 3.0, Reduced Gigabyte Media Independant Interface (RGMII), SGMII, XGMII, XAUI, CAN-FD, Flexray, GPIO, Ethernet, TSN ; et

dans lequel le premier bus et le second bus sont d'une conception de bus différente.

2. Système selon la revendication 1, dans lequel ledit bus commun (10) inclut une ligne unique pour une transmission sérielle de données le long de celle-ci.

3. Système selon la revendication 1 ou 2, dans lequel une ou plusieurs desdites unités est une unité de commande électronique (UCE).

4. Système selon les revendications 1 à 3, dans lequel une desdites unités de traitement est une UCE de véhicule principale.

5. Système selon les revendications 1 à 4, dans lequel une desdites unités de traitement est une unité de radar et/ou de caméra, et/ou une unité de systèmes avancés d'aide à la conduite (ADAS).

6. Système selon les revendications 1 à 5, dans lequel ladite première unité de conversion et/ou ladite seconde unité de conversion sont adaptées pour moduler un ou plusieurs signaux porteurs avec les données qu'il s'agit de transmettre.

7. Système selon la revendication 6, dans lequel ladite première unité de conversion et/ou ladite seconde unité de conversion sont adaptées pour moduler les données transmises en utilisant une ou plusieurs des techniques de transmission/modulation suivantes : multiplexage par répartition en fréquence (FDM) ; modulation par déplacement de phase (PSK) ; modulation par déplacement d'amplitude (ASK) ; et modulation d'amplitude en quadrature (QAM) ; et multiplexage par répartition en fréquence orthogonale (OFDM).

8. Procédé pour transmettre des données depuis une première unité de traitement d'un véhicule jusqu'à une ou plusieurs autres unités de traitement dudit véhicule, et pour transmettre des données depuis une seconde unité de traitement à une ou plusieurs autres unités de traitement, le procédé comprenant la transmission desdites données de manière sérielle le long d'un bus commun, comprenant les étapes consistant à :

a) recevoir des données depuis un premier bus de ladite première unité de traitement, ledit premier bus comprenant une première pluralité de lignes ;

b) convertir lesdites données reçues en un premier flux de données sérielles unique ;

c) transmettre ledit premier flux de données sérielles le long dudit bus commun ;

d) recevoir des données depuis un second bus de ladite seconde unité de traitement, ledit second bus comprenant une seconde pluralité de lignes ;

e) convertir lesdites données reçues en un second flux de données sérielles unique ;

f) transmettre ledit second flux de données sérielles le long dudit bus commun ;

dans lequel le premier bus comprend une des interfaces suivantes : interface sérielle de caméra (CSI), interface « Peripheral Component Interconnect » (PCI), PCIe 2.0, PCIe 3.0, HDMI 1.4b, Sata, NVMe, Display Port ; CSI II D-Phy, CSI II ; GMSL, LVDS, USB 3.0, Reduced Gigabyte Media Independant Interface (RGMII), SGMII, XGMII, XAUI, CAN-FD, Flexray, GPIO, Ethernet, TSN ; dans lequel le second bus comprend une des interfaces suivantes :

interface sérielle de caméra (CSI), interface « Peripheral Component Interconnect » (PCI), PCIe 2.0, PCIe 3.0, HDMI 1.4b, Sata, NVMe, Display Port ; CSI Port II D-Phy, CSI II ; GMSL, LVDS, USB 3.0, Reduced Gigabyte Media Independant Interface (RGMII), SGMII, XGMII, XAUI, CAN-FD, Flexray, GPIO, Ethernet, TSN ; et

dans lequel le premier bus et le second bus sont d'une conception de bus différente.

9.  Procédé selon la revendication 8, dans lequel ledit bus commun inclut une ligne unique pour une transmission sérielle de données le long de celle-ci.

10.  Procédé selon la revendication 8 ou 9, dans lequel une ou plusieurs desdites unités est une unité de commande électronique (UCE).

11.  Procédé selon les revendications 8 à 10, dans lequel une desdites unités de traitement est une UCE de véhicule principale.

12.  Procédé selon les revendications 8 à 11, dans lequel une desdites unités de traitement est une unité de radar et/ou de caméra, et/ou une unité de systèmes avancés d'aide à la conduite (ADAS).

13.  Procédé selon les revendications 8 à 12, dans lequel ladite étape de conversion b) inclut l'opération consistant à moduler un ou plusieurs signaux porteurs avec les données transmises.

14.  Procédé selon la revendication 13, dans lequel ladite modulation de données utilise une ou plusieurs des techniques de transmission/modulation suivantes : multiplexage par répartition en fréquence (FDM) ; modulation par déplacement de phase (PSK) ; modulation par déplacement d'amplitude (ASK) ; et modulation d'amplitude en quadrature (QAM).

FIG. 1

FIG. 2

FIG. 3

FIG. 4

FIG. 5a

FIG. 5b

FIG. 6

FIG. 7

FIG. 8

FIG. 9

FIG. 10 a

EP 3 324 548 B1

FIG. 10 b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 4687092 A